# EUROPEAN PATENT APPLICATION

(11) **EP 1 635 271 A1**
(43) Date of publication of application: **15.03.2006**
(21) Application number: 05251890.9
(22) Date of filing: 24.03.2005
(51) Int. Cl.: G06F 17/30

(54) **Circular self organizing neural network**

(30) Priority: 09.09.2004 GB 0420029
(71) Applicant: SONY UNITED KINGDOM LIMITED, Weybridge KT13 0XW (GB)
(72) Inventor: Thorpe, Jonathan Richard, Hampshire S022 4QF (GB); Prayle, Paul Edward, Basingstoke Hampshire RG23 8EJ (GB)
(74) Representative: Turner, James Arthur

(57) **Abstract**

An information handling method in which information items are mapped to respective nodes in an array of nodes by mutual similarity of the information items, such that similar information items map to nodes at similar positions in the array of nodes; there being a mapping relationship between frequencies of occurrence, within an information item, of each of a concordance of information features and nodes in the array of nodes, comprises the steps, in respect of an information item to be processed, of: detecting a closest node in the array of nodes, the closest node being that node for which the mapping relationship provides a closest match with the information item to be processed; selecting a group of nodes near, in the array, to the closest node; and modifying the mapping relationship so that the closest node and the group of nodes are brought generally closer to the information item to be processed; in which, for the purposes of selecting the group of nodes, the array wraps around so that a peripheral edge of the array is treated as adjacent to an opposite peripheral edge of the array.

## Description

This invention relates to information handling.

There are many established systems for locating information (e.g. documents, images, emails, patents, internet content or media content such as audio/video content) by searching under keywords. Examples include internet search "engines" such as those provided by "Google" ™ or "Yahoo" ™ where a search carried out by keyword leads to a list of results which are ranked by the search engine in order of perceived relevance.

However, in a system encompassing a large amount of content, often referred to as a massive content collection, it can be difficult to formulate effective search queries to give a relatively short list of search "hits". For example, at the time of preparing the present application, a Google search on the keywords "massive document collection" drew 243000 hits. This number of hits would be expected to grow if the search were repeated later, as the amount of content stored across the internet generally increases with time. Reviewing such a list of hits can be prohibitively time-consuming.

In general, some reasons why massive content collections are not well utilised are:
- a user doesn't know that relevant content exists
- a user knows that relevant content exists but does not know where it can be located
- a user knows that content exists but does not know it is relevant
- a user knows that relevant content exists and how to find it, but finding the content takes a long time

The paper "Self Organisation of a Massive Document Collection", Kohonen et al, IEEE Transactions on Neural Networks, Vol 11, No. 3, May 2000, pages 574-585 discloses a technique using so-called "self-organising maps" (SOMs). These make use of so-called unsupervised self-learning neural network algorithms in which "feature vectors" representing properties of each document are mapped onto nodes of a SOM.

In the Kohonen et al paper, a first step is to pre-process the document text, and then a feature vector is derived- from each pre-processed document. In one form, this may be a histogram showing the frequencies of occurrence of each of a large dictionary of words. Each data value (i.e. each frequency of occurrence of a respective dictionary word) in the histogram becomes a value in an n-value vector, where n is the total number of candidate words in the dictionary (43222 in the example described in this paper). Weighting may be applied to the n vector values, perhaps to stress the increased relevance or improved differentiation of certain words.

The n-value vectors are then mapped onto smaller dimensional vectors (i.e. vectors having a number of values m (500 in the example in the paper) which is substantially less than n. This is achieved by multiplying the vector by an (n x m) "projection matrix" formed of an array of random numbers. This technique has been shown to generate vectors of smaller dimension where any two reduced-dimension vectors have much the same vector dot product as the two respective input vectors. This vector mapping process is described in the paper "Dimensionality Reduction by Random Mapping: Fast Similarity Computation for Clustering", Kaski, Proc IJCNN, pages 413-418, 1998.

The reduced dimension vectors are then mapped onto nodes (otherwise called neurons) on the SOM by a process of multiplying each vector by a "model" (another vector). The models are produced by a learning process which automatically orders them by mutual similarity onto the SOM, which is generally represented as a two-dimensional grid of nodes. This is a non-trivial process which took Kohonen et al six weeks on a six-processor computer having 800 MB of memory, for a document database of just under seven million documents. Finally the grid of nodes forming the SOM is displayed, with the user being able to zoom into regions of the map and select a node, which causes the user interface to offer a link to an internet page containing the document linked to that node.

It has been recognised in empirical trials that, while the arrangement described above can provide a useful map, the map can suffer from various drawbacks. In particular, information items which could be perceived as being difficult to categorise tend to be placed at the very edges of the map by the training process. The weightings for nodes at the extremities of the map can therefore tend to reflect more extreme values than the weighting factors associated with nodes nearer the centre of the map. For this reason, nodes at the edge of the map tend to become less useful in representing the information items.

This invention provides an information handling method in which information items are mapped to respective nodes in an array of nodes by mutual similarity of the information items; such that similar information items map to nodes at similar positions in the array of nodes; there being a mapping relationship between frequencies of occurrence, within an information item, of each of a concordance of information features and nodes in the array of nodes;
the method comprising the steps of:
in respect of an information item to be processed:
   detecting a closest node in the array of nodes, the closest node being that node for which the mapping relationship provides a closest match with the information item to be processed;
   selecting a group of nodes near, in the array, to the closest node; and
   modifying the mapping relationship so that the closest node and the group of nodes are brought generally closer to the information item to be processed;
   in which, for the purposes of selecting the group of nodes, the array wraps around so that a peripheral edge of the array is treated as adjacent to an opposite peripheral edge of the array.

Further respective aspects and features of the invention are defined in the appended claims.

Embodiments of the invention will now be described, by way of example only, with reference to the accompanying drawings in which:
Figure 1 schematically illustrates an information storage and retrieval system;
Figure 2 is a schematic flow chart showing the generation of a self-organising map (SOM);
Figures 3a and 3b schematically illustrate term frequency histograms;
Figure 4a schematically illustrates a raw feature vector;
Figure 4b schematically illustrates a reduced feature vector;
Figure 5 schematically illustrates an SOM;
Figure 6 schematically illustrates a dither process;
Figures 7 to 9 schematically illustrate display screens providing a user interface to access information represented by the SOM;
Figure 10 schematically illustrates a camcorder as an example of a video acquisition and/or processing apparatus;
Figure 11 schematically illustrates a personal digital assistant as an example of portable data processing apparatus;
Figures 12 and 13 schematically illustrate training processes;
Figure 14 schematically illustrates a bubble training profile;
Figure 15 schematically illustrates a Gaussian training profile;
Figure 16 schematically illustrates a previously proposed training process applied to a node at the edge of an SOM;
Figure 17 schematically illustrates an SOM; and
Figures 18 and 19 schematically illustrate training processes applied to nodes at the edge of an SOM.

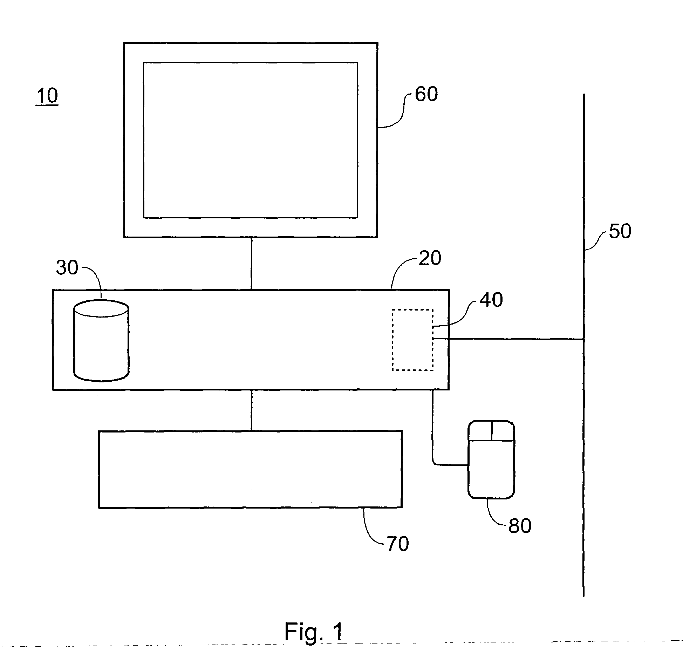

Figure 1 is a schematic diagram of an information storage and retrieval system based around a general-purpose computer 10 having a processor unit 20 including disk storage 30 for programs and data, a network interface card 40 connected to a network 50 such as an Ethernet network or the Internet, a display device such as a cathode ray tube device 60, a keyboard 70 and a user input device such as a mouse 80. The system operates under program control, the programs being stored on the disk storage 30 and provided, for example, by the network 50, a removable disk (not shown) or a pre-installation on the disk storage 30.

The storage system operates in two general modes of operation. In a first mode, a set of information items (e.g. textual information items) is assembled on the disk storage 30 or on a network disk drive connected via the network 50 and is sorted and indexed ready for a searching operation. The second mode of operation is the actual searching against the indexed and sorted data.

The embodiments are applicable to many types of information items. A non-exhaustive list of appropriate types of information includes patents, video material, emails, presentations, internet content, broadcast content, business reports, audio material, graphics and clipart, photographs and the like, or combinations or mixtures of any of these. In the present description, reference will be made to textual information items, or at least information items having a textual content or association. So, for example, a piece of broadcast content such as audio and/or video material may have associated "MetaData" defining that material in textual terms.

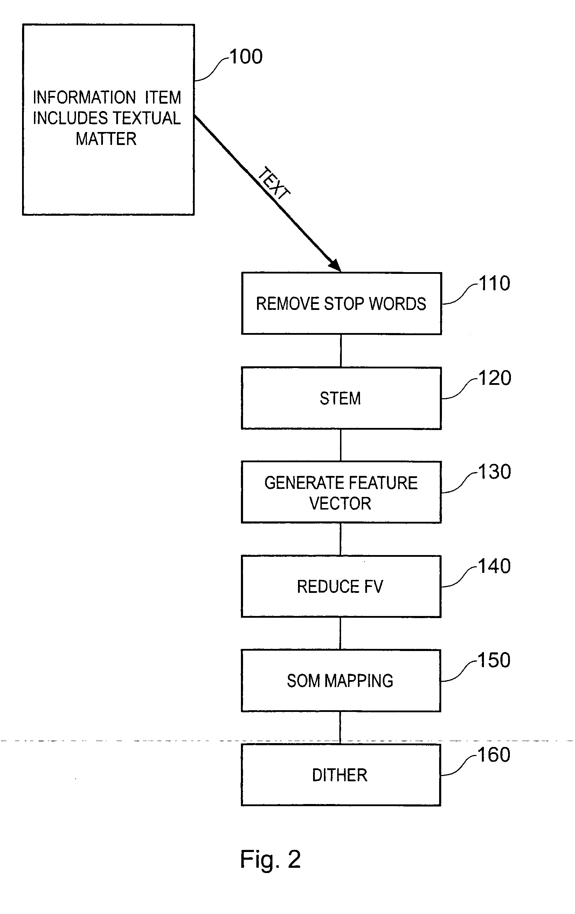

The information items are loaded onto the disk storage 30 in a conventional manner. Preferably, they are stored as part of a database structure which allows for easier retrieval and indexing of the items, but this is not essential. Once the information and items have been so stored, the process used to arrange them for searching is shown schematically in Figure 2.

It will be appreciated that the-indexed information data need not be stored on the local disk drive 30. The data could be stored on a remote drive connected to the system 10 via the network 50. Alternatively, the information may be stored in a distributed manner, for example at various sites across the internet. If the information is stored at different internet or network sites, a second level of information storage could be used to store locally a "link" (e.g. a URL) to the remote information, perhaps with an associated summary, abstract or MetaData associated with that link. So, the remotely held information would not be accessed unless the user selected the relevant link (e.g. from the results list 260 to be described below), although for the purposes of the technical description which follows, the remotely held information, or the abstract/summary/MetaData, or the link/URL could be considered as the "information item".

In other words, a formal definition of the "information item" is an item from which a feature vector is derived and processed (see below) to provide a mapping to the SOM. The data shown in the results list 260 (see below) may be the information item itself (if it is held locally and is short enough for convenient display) or may be data representing and/or pointing to the information item, such as one or more of MetaData, a URL, an abstract, a set of key words, a representative key stamp image or the like. This is inherent in the operation "list" which often, though not always, involves listing *data representing* a set of items.

In a further example, the information items could be stored across a networked work group, such as a research team or a legal firm. A hybrid approach might involve some information items stored locally and/or some information items stored across a local area network and/or some information items stored across a wide area network. In this case, the system could be useful in locating similar work by others, for example in a large multinational research and development organisation, similar research work would tend to be mapped to similar output nodes in the SOM (see below). Or, if a new television programme is being planned, the present technique could be used to check for its originality by detecting previous programmes having similar content.

It will also be appreciated that the system 10 of Figure 1 is but one example of possible systems which could use the indexed information items. Although it is envisaged that the initial (indexing) phase would be carried out by a reasonably powerful computer, most likely by a non-portable computer, the later phase of accessing the information could be carried out at a portable machine such as a "personal digital assistant" (a term for a data processing device with display and user input devices, which generally fits in one hand), a portable computer such as a laptop computer, or even devices such as a mobile telephone, a video editing apparatus or a video camera. In general, practically any device -having a display could be used for the information-accessing phase of operation.

The processes are not limited to particular numbers of information items.

The process of generating a self-organising map (SOM) representation of the information items will now be described with reference to Figures 2 to 6. Figure 2 is a schematic flow chart illustrating a so-called "feature extraction" process followed by an SOM mapping process.

Feature extraction is the process of transforming raw data into an abstract representation. These abstract representations can then be used for processes such as pattern classification, clustering and recognition. In this process, a so-called "feature vector" is generated, which is an abstract representation of the frequency of terms used within a document.

The process of forming the visualisation through creating feature vectors includes:
- Create "document database dictionary" of terms
- Create "term frequency histograms" for each individual document based on the "document database dictionary"
- Reduce the dimension of the "term frequency histogram" using random mapping
- Create a 2-dimensional visualisation of the information space.

Considering these steps in more detail, each document (information item) 100 is opened in turn. At a step 110, all "stop words" are removed from the document. Stop-words are extremely common words on a pre-prepared list, such as "a", "the", "however", "about", "and", and "the". Because these words are extremely common they are likely, on average, to appear with similar frequency in all documents of a sufficient length. For this reason they serve little purpose in trying to characterise the content of a particular document and should therefore be removed.

After removing stop-words, the remaining words are stemmed at a step 120, which involves finding the common stem of a word's variants. For example the words "thrower", "throws", and "throwing" have the common stem of "throw".

A "dictionary" of stemmed words appearing in the documents (excluding the "stop" words) is maintained. As a word is newly encountered, it is added to the dictionary, and running count of the number of times the word has appeared in the whole document collection (set of information items) is also recorded.

The result is a list of terms used in all the documents in the set, along with the frequency with which those terms occur. Words that occur with too high or too low a frequency are discounted, which is to say that they are removed from the dictionary and do not take part in the analysis which follows. Words with too low a frequency may be misspellings, made up, or not relevant to the domain represented by the document set. Words that occur with too high a frequency are less appropriate for distinguishing documents within the set. For example, the term "News" is used in about one third of all documents in the a test set of broadcast-related documents, whereas the word "football" is used in only about 2% of documents in the test set. Therefore "football" can be assumed to be a better term for characterising the content of a document than "News". Conversely, the word "fottball" (a misspelling of "football") appears only once in the entire set of documents, and so is discarded for having too low an occurrence. Such words may be defined as those having a frequency of occurrence which is lower than two standard deviations less than the mean frequency of occurrence, or which is higher than two standard deviations above the mean frequency of occurrence.

A feature vector is then generated at a step 130.

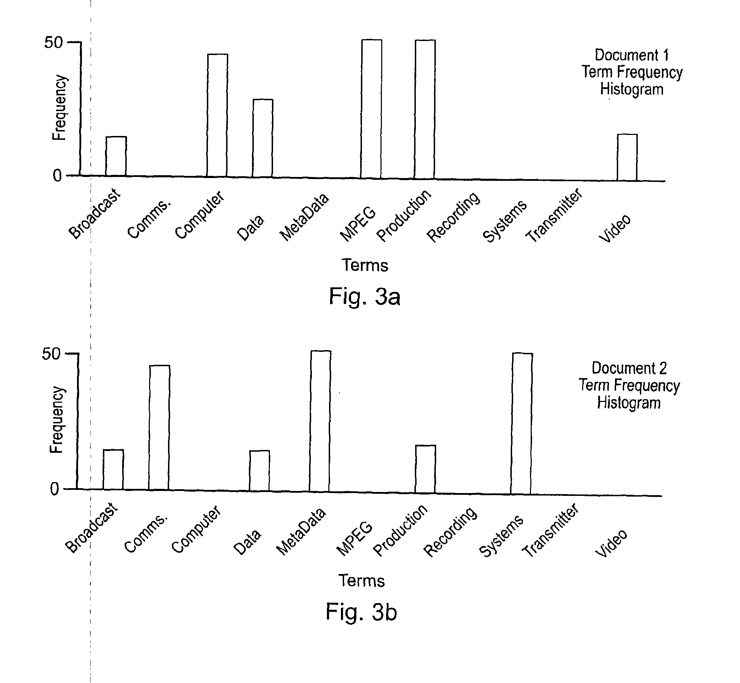

To do this, a term frequency histogram is generated for each document in the set. A term frequency histogram is constructed by counting the number of times words present in the dictionary (pertaining to that document set) occur within an individual document. The majority of the terms in the dictionary will not be present in a single document, and so these terms will have a frequency of zero. Schematic examples of term frequency histograms for two different documents are shown in Figures 3a and 3b.

It can be seen from this example how the histograms characterise the content of the documents. By inspecting the examples it is seen that document 1 has more occurrences of the terms "MPEG" and "Video" than document 2, which itself has more occurrences of the term "MetaData". Many of the entries in the histogram are zero as the corresponding words are not present in the document.

In a real example, the actual term frequency histograms have a very much larger number of terms in them than the example. Typically a histogram may plot the frequency of over 50000 different terms, giving the histogram a dimension of over 50000. The dimension of this histogram needs to be reduced considerably if it is to be of use in building an SOM information space.

Each entry in the term frequency histogram is used as a corresponding value in a feature vector representing that document. The result of this process is a (50000 x 1) vector containing the frequency of all terms specified by the dictionary for each document in the document collection. The vector may be referred to as "sparse" since most of the values will typically be zero, with most of the others typically being a very low number such as 1.

The size of the feature vector, and so the dimension of the term frequency histogram, is reduced at a step 140. Two methods are proposed for the process of reducing the dimension of the histogram.
i) Random Mapping - a technique by which the histogram is multiplied by a matrix of random numbers. This is a computationally cheap process.
ii) Latent Semantic Indexing - a technique whereby the dimension of the histogram is reduced by looking for groups of terms that have a high probability of occurring simultaneously in documents. These groups of words can then be reduced to a single parameter. This is a computationally expensive process.

The method selected for reducing the dimension of the term frequency histogram in the present embodiment is "random mapping", as explained in detail in the Kaski paper referred to above. Random mapping succeeds in reducing the dimension of the histogram by multiplying it by a matrix of random numbers.

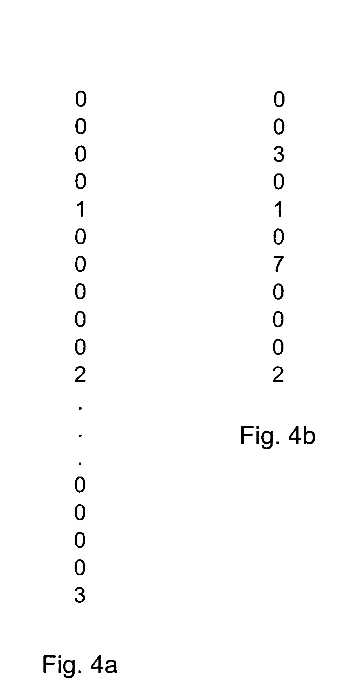

As mentioned above, the "raw" feature vector (shown schematically in Figure 4a) is typically a sparse vector with a size in the region of 50000 values. This can be reduced to size of about 200 (see schematic Figure 4b) and still preserve the *relative* characteristics of the feature vector, that is to say, its relationship such as relative angle (vector dot product) with other similarly processed feature vectors. This works because although the number of orthogonal vectors of a particular dimension is limited, the number of *nearly* orthogonal vectors is very much larger.

In fact as the dimension of the vector increases any given set of randomly generated vectors are nearly orthogonal to each other. This property means that the relative direction of vectors multiplied by this a matrix of random numbers will be preserved. This can be demonstrated by showing the similarity of vectors before and after random mapping by looking at their dot product.

It can be shown experimentally that by reducing a sparse vector from 50000 values to 200 values preserves their relative similarities. However, this mapping is not perfect, but suffices for the purposes of characterising the content of a document in a compact way.

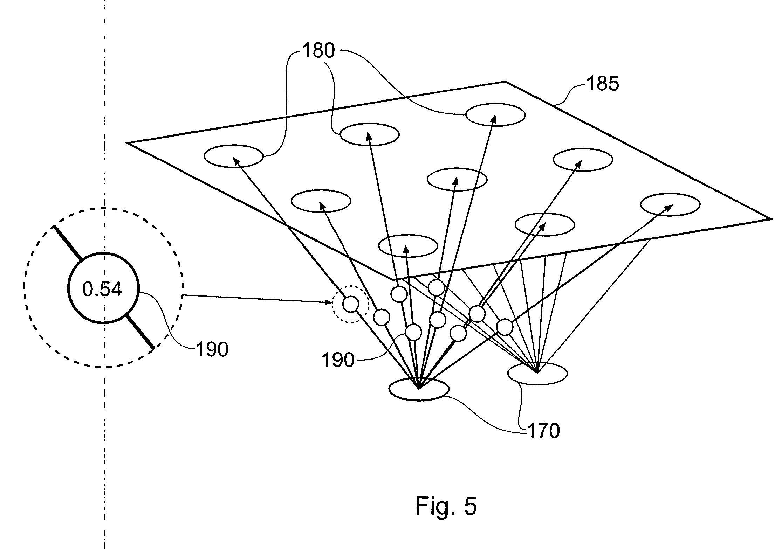

Once feature vectors have been generated for the document collection, thus defining the collection's information space, they are projected into a two-dimensional SOM at a step 150 to create a semantic map. The following section explains the process of mapping to 2-D by clustering the feature vectors using a Kohonen self-organising map. Reference is also made to Figure 5.

A Kohonen Self-Organising map is used to cluster and organise the feature vectors that have been generated for each of the documents.

A self-organising map consists of input nodes 170 and output nodes 180 in a two-dimensional array or grid of nodes illustrated as a two-dimensional plane 185. There are as many input nodes as there are values in the feature vectors being used to train the map. Each of the output nodes on the map is connected to the input nodes by weighted connections 190 (one weight per connection).

Initially each of these weights is set to a random value, and then, through an iterative process, the weights are "trained". The map is trained by presenting each feature vector to the input nodes of the map. The "closest" output node is calculated by computing the Euclidean distance between the input vector and weights of each of the output nodes.

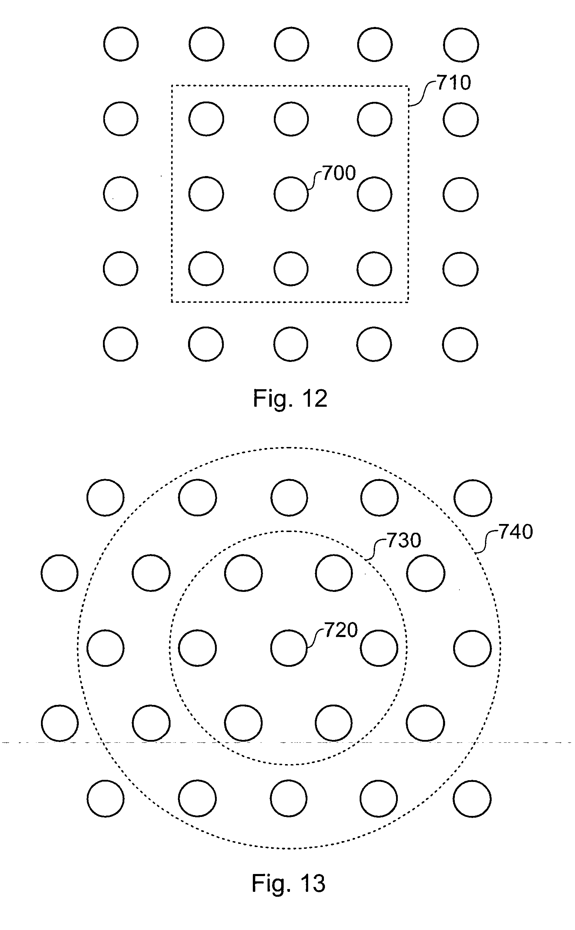

The closest node is designated the "winner" and the weights of this node are trained by slightly changing the values of the weights so that they move "closer" to the input vector. In addition to the winning node, the nodes in the neighbourhood of the winning node are also trained, and moved slightly closer to the input vector. This process will be described further below with reference to Figures 12 to 19.

It is this process of training not just the weights of a single node, but the weights of a region of nodes on the map, that allow the map, once trained, to preserve much of the topology of the input space in the 2-D map of nodes.

Once the map is trained, each of the documents can be presented to the map to see which of the output nodes is closest to the input feature vector for that document. It is unlikely that the weights will be identical to the feature vector, and the Euclidean distance between a feature vector and its nearest node on the map is known as its "quantisation error".

By presenting the feature vector for each document to the map to see where it lies yields and x, y map position for each document. These x, y positions when put in a look up table along with a document ID can be used to visualise the relationship between documents.

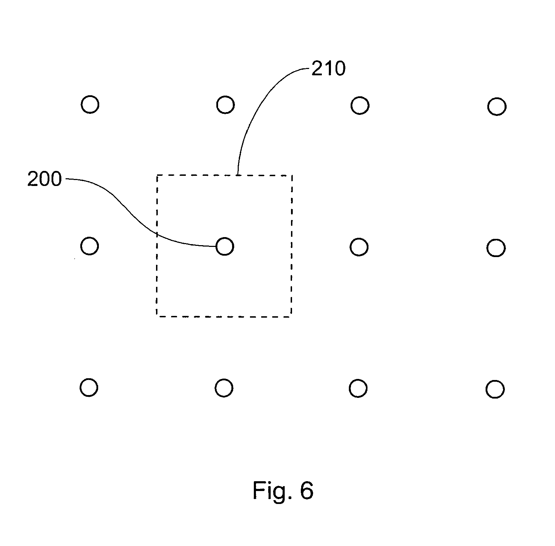

Finally, a dither component is added at a step 160, which will be described with reference to Figure 6 below.

A potential problem with the process described above is that two identical, or substantially identical, information items may be mapped to the same node in the array of nodes of the SOM. This does not cause a difficulty in the handling of the data, but does not help with the visualisation of the data on display screen (to be described below). In particular, when the data is visualised on a display screen, it has been recognised that it would be useful for multiple very similar items to be distinguishable over a single item at a particular node. Therefore, a "dither" component is added to the node position to which each information item is mapped. The dither component is a random addition of ±½ of the node separation. So, referring to Figure 6, an information item for which the mapping process selects an output node 200 has a dither component added so that it in fact may be mapped to any node position within the area 210 bounded by dotted lines on Figure 6.

So, the information items can be considered to map to positions on the plane of Figure 6 at node positions other than the "output nodes" of the SOM process.

An alternative approach might be to use a much higher density of "output nodes" in the SOM mapping process described above. This would not provide any distinction between absolutely identical information items, but may allow almost, but not completely, identical information items to map to different but closely spaced output nodes.

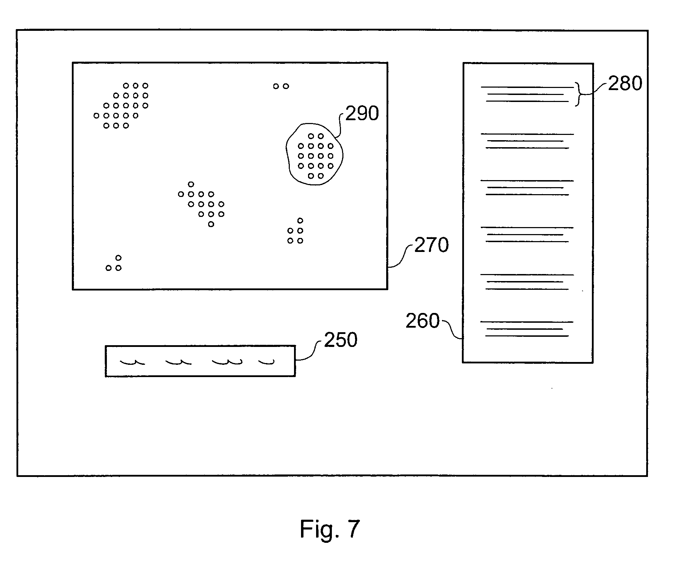

Figure 7 schematically illustrates a display on the display screen 60 in which data sorted into an SOM is graphically illustrated for use in a searching operation. The display shows a search enquiry 250, a results list 260 and an SOM display area 270.

In operation, the user types a key word search enquiry into the enquiry area 250. The user then initiates the search, for example by pressing enter on the keyboard 70 or by using the mouse 80 to select a screen "button" to start the search. The key words in the search enquiry box 250 are then compared with the information items in the database using a standard keyword search technique. This generates a list of results, each of which is shown as a respective entry 280 in the list view 260. Also, each result has a corresponding display point on the node display area 270.

Because the sorting process used to generate the SOM representation tends to group mutually similar information items together in the SOM, the results for the search enquiry generally tend to fall in clusters such as a cluster 290. Here, it is noted that each point on the area 270 corresponds to the respective entry in the SOM associated with one of the results in the result list 260; and the positions at which the points are displayed within the area 270 correspond to the array positions of those nodes within the node array.

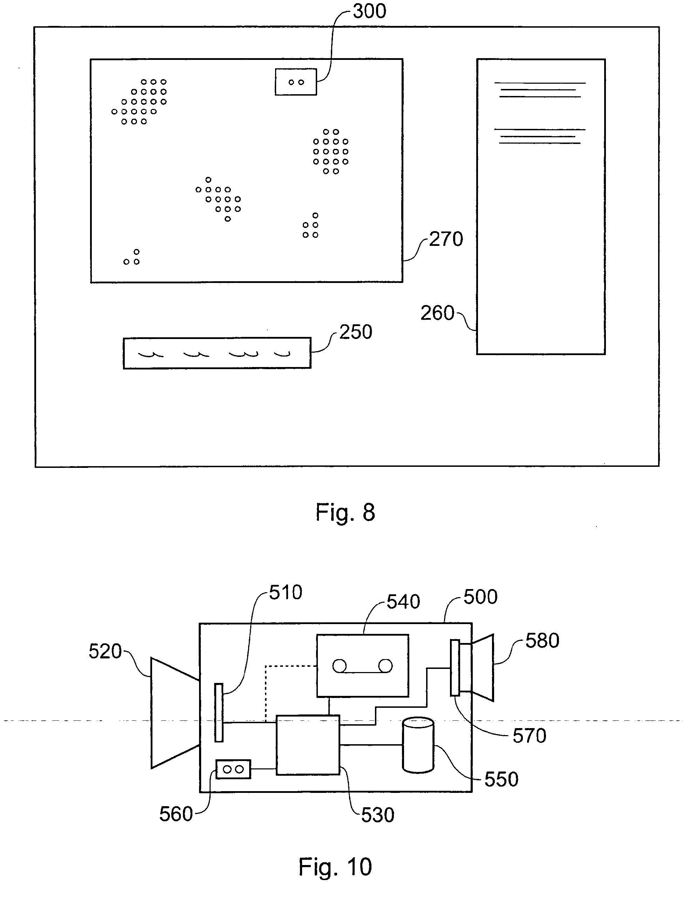

Figure 8 schematically illustrates a technique for reducing the number of "hits" (results in the result list). The user makes use of the mouse 80 to draw a box 300 around a set of display points corresponding to nodes of interest. In the results list area 260, only those results corresponding to points within the box 300 are displayed. If these results turn out not to be of interest, the user may draw another box encompassing a different set of display points.

It is noted that the results area 260 displays list entries for those results for which display points are displayed within the box 300 and which satisfied the search criteria in the word search area 250. The box 300 may encompass other display positions corresponding to populated nodes in the node array, but if these did not satisfy the search criteria they will not be displayed and so will not form part of the subset of results shown in the box 260.

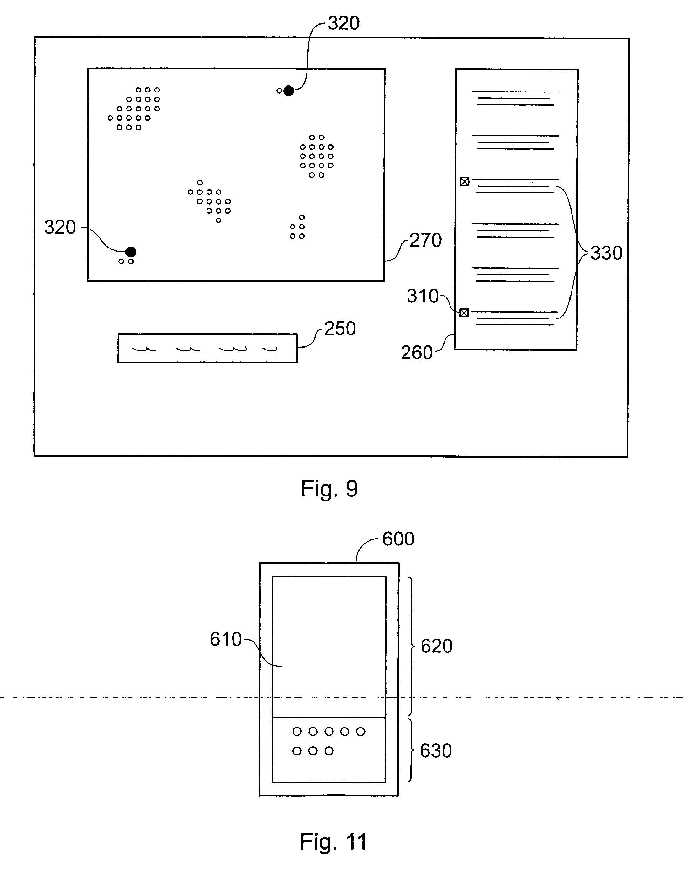

Figure 9 schematically illustrates a technique for detecting the node position of an entry in the list view 260. Using a standard technique in the field of graphical user interfaces, particularly in computers using the so-called "Windows" TM operating system, the user may "select" one or more of the entries in the results list view. In the examples shown, this is done by a mouse click on a "check box" 310 associated with the relevant results. However, it could equally be done by clicking to highlight the whole result, or by double-clicking on the relevant result and so on. As a result is selected, the corresponding display point representing the respective node in the node array is displayed in a different manner. This is shown schematically for two display points 320 corresponding to the selected results 330 in the results area 260.

The change in appearance might be a display of the point in a larger size, or in a more intense version of the same display colour, or in a different display colour, or in a combination of these varying attributes.

At any time, a new information item can be added to the SOM by following the steps outlined above (i.e. steps 110 to 140) and then applying the resulting reduced feature vector to the "pre-trained" SOM models, that is to say, the set of SOM models which resulted from the self-organising preparation of the map. So, for the newly added information item, the map is not generally "retrained"; instead steps 150 and 160 are used with all of the SOM models not being amended. To retrain the SOM every time a new information item is to be added is computationally expensive and is also somewhat unfriendly to the user, who might grow used to the relative positions of commonly accessed information items in the map.

However, there may well come a point at which a retraining process is appropriate. For example, if new terms (perhaps new items of news, or a new technical field) have entered into the dictionary since the SOM was first generated, they may not map particularly well to the existing set of output nodes. This can be detected as an increase in a so-called "quantisation error" detected during the mapping of newly received information item to the existing SOM. In the present embodiments, the quantisation error is compared to a threshold error amount. If it is greater than the threshold amount then either (a) the SOM is automatically retrained, using all of its original information items and any items added since its creation; or (b) the user is prompted to initiate a retraining process at a convenient time. The retraining process uses the feature vectors of all of the relevant information items and reapplies the steps 150 and 160 in full.

Figure 10 schematically illustrates a camcorder 500 as an example of a video acquisition and/or processing apparatus, the camcorder including an image capture device 510 with an associated lens 520; a data/signal processor 530; tape storage 540; disk or other random access storage 550; user controls 560; and a display device 570 with eyepiece 580. Other features of conventional camcorders or other alternatives (such as different storage media or different display screen arrangements) will be apparent to the skilled man. In use, MetaData relating to captured video material may be stored on the storage 550, and an SOM relating to the stored data viewed on the display device 570 and controlled as described above using the user controls 560.

Figure 11 schematically illustrates a personal digital assistant (PDA) 600, as an example of portable data processing apparatus, having a display screen 610 including a display area 620 and a touch sensitive area 630 providing user controls; along with data processing and storage (not shown). Again, the skilled man will be aware of alternatives in this field. The PDA may be used as described above in connection with the system of Figure 1.

The node training process mentioned earlier will now be described in more detail with reference to Figures 12 to 19.

As mentioned above, during the SOM training process, when the "closest" node is found for a particular feature vector, the node weighting applicable to that node is altered. The alteration is made in such a way that the closest node would be slightly more likely to be the closest node after the alteration. In addition, nearby nodes are also adjusted, in such a way that their adjusted weightings bring them slightly closer to the current information item's feature vector.

This process is illustrated schematically in Figure 12. Here, a closest node 700 has been identified. The weighting associated with that node is adjusted. After the adjustment, the node 700 would still be the closest node, and indeed would be slightly closer to the current feature vector.

But in addition to the adjustment made to the weighting of the closest node 700, adjustments are also made to other nearby nodes, within a region 710 surrounding the closest node. The simplified example shown in Figure 12 has the nodes arranged in a rectangular grid and any node within a grid position of ±1 of the closest node has its weighting adjusted in this way.

In another conceptual view of the nodes of the self organising map, the nodes are arranged in an offset or hexagonally-packed grid such as the grid shown in Figure 13. This has an advantage that for any particular node, the adjacent nodes in all directions are an equal distance from that node. This allows a straightforward polar distance-based function to be used for selecting nodes to be modified.

In Figure 13, a closest node 720 has been identified. In one example, the weightings associated with nodes in a region 730 are modified. The region 730 is defined by a distance from the closest node, and includes all of the nodes immediately adjacent to the closest node 720. However, a different distance-based function could be used, for example to define the region 740 as the nodes which are to be modified.

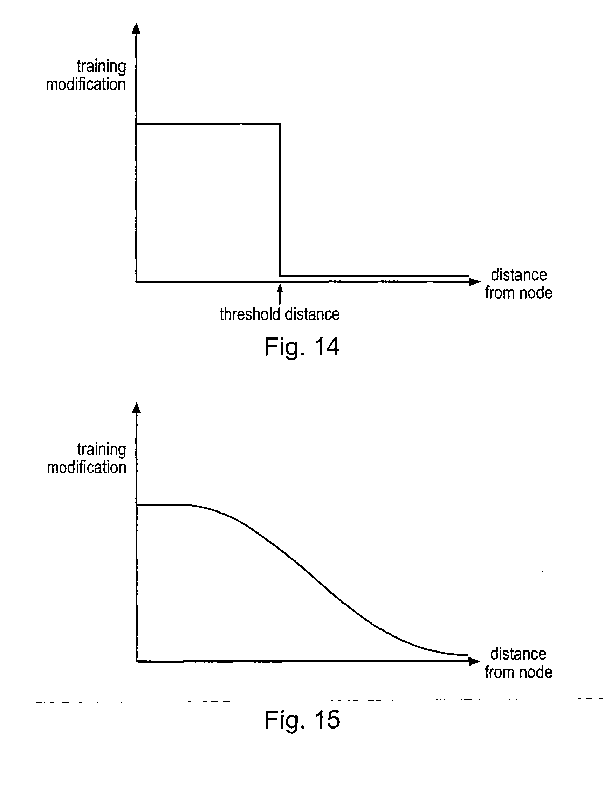

Figure 14 schematically illustrates a so-called "bubble" training profile. This term has been coined for a node training arrangement in which an equal modification (e.g. an equal multiplicative factor or an equal additive factor) is applied to the weighting of all nodes within a certain distance of the node 720 in Figure 13. Outside of the threshold distance, no modification is applied.

An alternative scheme, referred to as a "Gaussian" training profile, is schematically illustrated in Figure 15. Here, the amount of modification applied to a node depends upon its distance from the node 720, with the amount of modification generally decreasing as the distance increases.

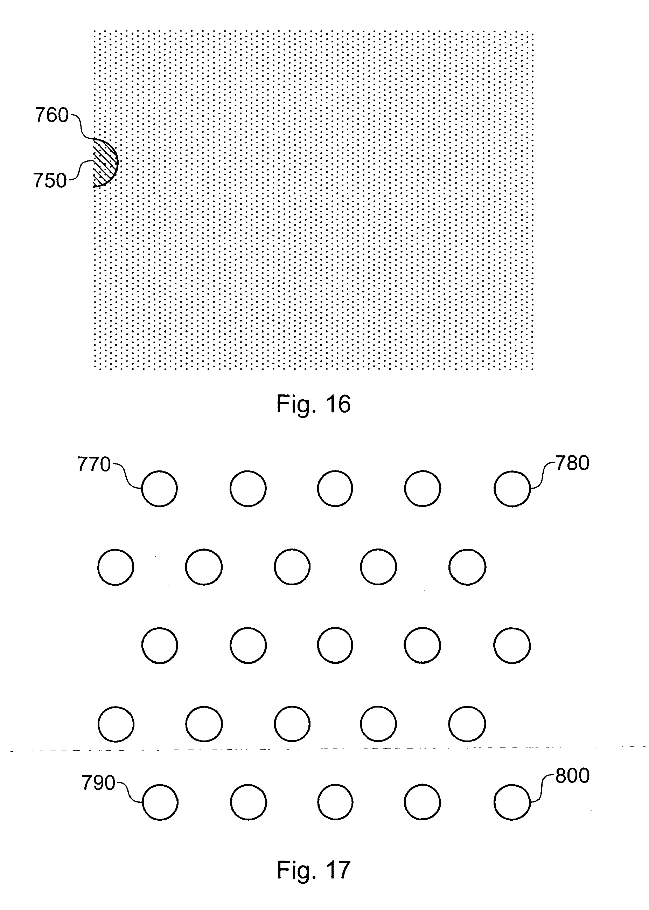

So far the examples which have been described are arranged so that the closest node (700 or 720) is well away from the edge of the SOM. Figure 16 schematically illustrates what happens if the closest node is at all very near the edge of the SOM. Note that in Figure 16, many more nodes are illustrated to aid in the clarity of the diagram.

Referring to Figure 16, a node 750 has been identified as the closest node and a generally semicircular region 760 is selected for weighting modification. No nodes to the left of the closest node 750 are modified because there are no such nodes in the map as drawn.

It has been recognised in empirical trials that, while the arrangement of Figure 16 can provide a useful map, the map can suffer from various drawbacks. In particular, information items which could be perceived as being difficult to categorise tend to be placed at the very edges of the map by the training process. The weightings for nodes at the extremities of the map can therefore tend to reflect more extreme values than the weighting factors associated with nodes nearer the centre of the map. For this reason, nodes at the edge of the map tend to become less useful in representing the information items.

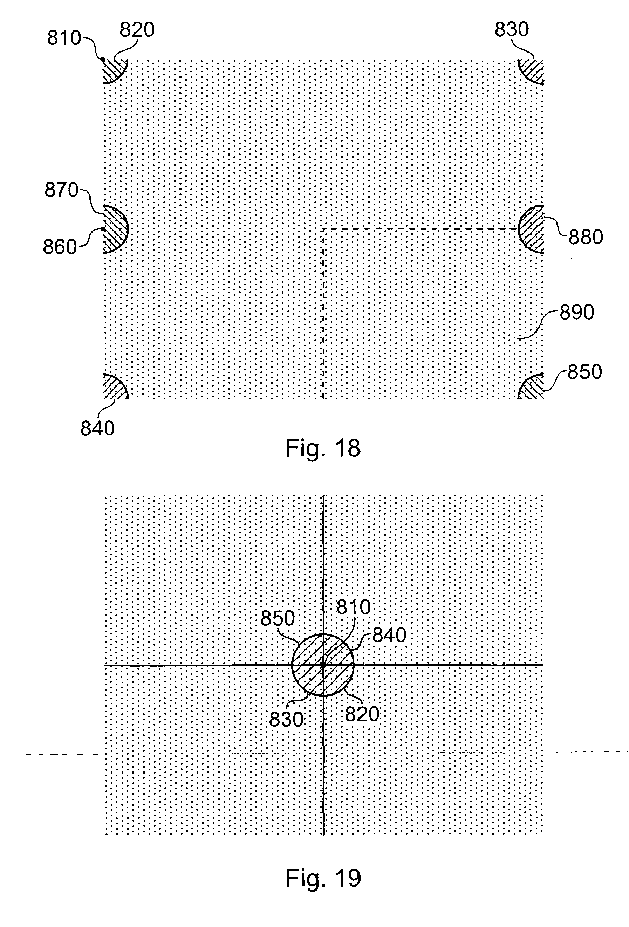

A solution to this problem is shown schematically in Figure 17, which again illustrates an SOM. In this elegantly straightforward arrangement, the map is considered to wrap around at each edge. So, a node 770 is considered to be adjacent to a node 780 and also to a node 790. The nodes 770 and 780 are considered adjacent in the horizontal direction (as drawn) and the nodes 770 and 790 are considered adjacent in the vertical direction. Furthermore, the node 770 is considered to adjacent to a node 800 at the opposite corner of the map. The way in which this is achieved will be described below with reference to Figure 19 but, first, reference will be made to Figure 18 which shows the effect of this measure.

Referring to Figure 18, a closest node 810 has been identified. The nodes within the region selected for modification comprise those nodes within four sub regions 820, 830, 840 and 850. Similarly, for a node 860 at one edge of the SOM, nodes within two sub regions 870 and 880 are selected for modification.

Figure 19 schematically illustrates a simple way in which this revised mapping can be obtained. If a particular node (a closest node for example) is identified as being within a threshold distance of the edge of the map, the map is transformed as follows.

If the closest node is detected to lie within a threshold distance from an edge of the array (where the threshold distance could be, for example, a half of the width or height of the map as appropriate), the map is rearranged so that the map is effectively split and what were the two opposite edges are made adjacent to one another, before the group of nodes is selected for training modification. This process can be carried out in both vertical and horizontal directions or, as required, only in the vertical direction or only in the horizontal direction. Of course, no nodes need actually be moved; the rearrangement can be carried out simply by temporarily altering the addressing of nodes during the training process. Figures 18 and 19 show an example region 890 which is rearranged in this way, and the effect of the rearrangement on the regions 820...850.

The position in the map at which the split (and rearrangement) takes place is variable. In the example illustrated, the map is split at approximately half-way positions both horizontally and vertically. But the split positions could be different. In each direction, a portion including the "closest node" can be split off and notionally rearranged (for the purposes of considering that closest node) to the opposite side of the map, where ideally that portion is at least as wide as the extent of the group of nodes which will be modified in that training process, and also that the remaining part of the map also meets the same constraint. The result here is that in the rearranged map, the group of nodes to be modified is not split between map regions.

Another technique for treating the map so that the edges wrap around in this way is to process the map to determine the nodes to be adjusted during the training process using map addresses in the horizontal direction modulus n, where n is the horizontal width of the map (in nodes) at that position, and to use map addresses in the vertical direction modulus m, where m is the height of the map (in nodes) at that position.

It will be appreciated that references to "vertical" and "horizontal" directions, and terms such as "width" are used merely to aid the clarity of the description. They do not refer to any physical attributes of the array of nodes.

Finally, when the map is displayed, the same type of technique can be applied. That is to say, the map can be displayed in a wrapped around form so that nodes at an extreme edge of the map are displayed as adjacent to nodes at the opposite edge. In this way, the map appears to the user to be endless in any direction.

## Claims

1. An information handling method in which information items are mapped to respective nodes in an array of nodes by mutual similarity of the information items, such that similar information items map to nodes at similar positions in the array of nodes; there being a mapping relationship between frequencies of occurrence, within an information item, of each of a concordance of information features and nodes in the array of nodes;
the method comprising the steps of:
in respect of an information item to be processed:
detecting a closest node in the array of nodes, the closest node being that node for which the mapping relationship provides a closest match with the information item to be processed;
selecting a group of nodes near, in the array, to the closest node; and
modifying the mapping relationship so that the closest node and the group of nodes are brought generally closer to the information item to be processed;
in which, for the purposes of selecting the group of nodes, the array wraps around so that a peripheral edge of the array is treated as adjacent to an opposite peripheral edge of the array.

2. A method according to claim 1, in which nodes within a threshold distance of the closest node are selected for modification.

3. A method according to claim 1 or claim 2, comprising the steps of:
generating a feature vector derived from the information item to be processed, the feature vector for an information item representing a set of frequencies of occurrence, within that information item, of each of the concordance of information features; and
mapping the feature vector to a node in the array of nodes.

4. A method according to any one of the preceding claims, in which:
the information items comprise textual information; and
the information features comprise words.

5. A method according to claim 4, in which the information features comprise the linguistic stems of words having plural possible linguistic forms.

6. A method according to claim 4 or claim 5, in which the information features exclude a predetermined set of words.

7. A method according to any one of the preceding claims, comprising a graphical user interface for displaying a representation of at least some of the nodes as a two-dimensional display array of display points within a display area on a user display.

8. A method according to claim 7 in which, for the purposes of displaying the nodes, the array wraps around so that a peripheral edge of the array is treated as adjacent to an opposite peripheral edge of the array.

9. Computer software having program code for carrying out a method according to any one of the preceding claims.

10. A providing medium for providing program code according to claim 9.

11. A medium according to claim 10, the medium being a storage medium.

12. A medium according to claim 10, the medium being a transmission medium.

13. An information handling system in which information items are mapped to respective nodes in an array of nodes by mutual similarity of the information items, such that similar information items map to nodes at similar positions in the array of nodes; there being a mapping relationship between frequencies of occurrence, within an information item, of each of a concordance of information features and nodes in the array of nodes;
the system comprising:
means, operable in respect of an information item to be processed, for detecting a closest node in the array of nodes, the closest node being that node for which the mapping relationship provides a closest match with the information item to be processed;
means for selecting a group of nodes near, in the array, to the closest node; and
means for modifying the mapping relationship so that the closest node and the group of nodes are brought generally closer to the information item to be processed;
in which, for the purposes of selecting the group of nodes, the array wraps around so that a peripheral edge of the array is treated as adjacent to an opposite peripheral edge of the array.

14. A portable data processing device comprising a system according to claim 13.

15. Video acquisition and/or processing apparatus comprising a system according to claim 13.
